# EUROPÄISCHE PATENTANMELDUNG

(11) **EP 3 255 158 A1**
(43) Veröffentlichungstag der Anmeldung: **13.12.2017**
(21) Anmeldenummer: 16173659.0
(22) Anmeldetag: 09.06.2016
(51) Int. Cl.: C21B 13/00, F27B 1/21, F27D 17/00

(54) **VERFAHREN UND VORRICHTUNG ZUR DIREKTREDUKTION UNTER VENTGASNUTZUNG**

(71) Anmelder: Primetals Technologies Austria GmbH, 4031 Linz (AT)
(72) Erfinder: Millner, Robert, 3382 Loosdorf (AT)
(74) Vertreter: Metals@Linz

(57) **Zusammenfassung**

Die Anmeldung betrifft ein Verfahren zur Direktreduktion von metalloxidhältigen Einsatzstoffen, zu metallisiertem Material durch Kontakt mit heißem Reduktionsgas in einem Reduktionsaggregat (1), wobei das Produkt der Direktreduktion aus dem Reduktionsaggregat über eine Produktaustragsvorrichtung ausgetragen wird, welche mit Sperrgas gespült wird, und aus der Ventgas abgezogen und nachfolgend entstaubt wird. Zumindest eine Teilmenge des entstaubten Ventgases wird als Energiequelle bei einer Verbrennung bei der Herstellung des Reduktionsgases, und/oder als Komponente eines Ofenbrenngases einer Verbrennung zur Aufheizung des Reduktionsgases, und/oder als Komponente des Reduktionsgases genutzt. Die Anmeldung betrifft auch Vorrichtungen zur Durchführung des Verfahrens.

## Beschreibung

### Gebiet der Technik

Die Anmeldung betrifft ein Verfahren zur Direktreduktion von metalloxidhältigen Einsatzstoffen, zu metallisiertem Material durch Kontakt mit heißem Reduktionsgas in einem Reduktionsaggregat, wobei das Produkt der Direktreduktion aus dem Reduktionsaggregat über eine Produktaustragsvorrichtung ausgetragen wird, welche mit Sperrgas gespült wird, und aus der Ventgas abgezogen und nachfolgend entstaubt wird. Die Anmeldung betrifft auch Vorrichtungen zur Durchführung des erfindungsgemäßen Verfahrens.

### Stand der Technik

Um aus Metallerzen Metalle zu gewinnen, ist es notwendig, den Sauerstoffanteil in den Erzen zu erniedrigen. Ein Verfahren zur Erniedrigung des Sauerstoffanteils ist die sogenannte Direktreduktion, bei der man ein Reduktionsgas in einem Reduktionsaggregat auf das feste Metallerz einwirken lässt. Das feste Produkt der Direktreduktion wird aus dem Reduktionsaggregat ausgetragen und kann auf verschiedene Weisen weiterverarbeitet werden - beispielsweise wird es oft heiß kompaktiert, beispielsweise brikettiert, um es leichter handhabbar zu machen und seine spezifische Oberfläche zu vermindern, damit Ablauf von Rückoxidation, beispielsweise durch Reaktion mit Luftsauerstoff oder H2O - beispielsweise als Wasserdampf -, erschwert wird. Es ist aber auch bekannt, es ohne Kompaktierung in anderen Aggregaten weiterzuverarbeiten. Das Reduktionsaggregat, in dem die Direktreduktion abläuft, ist oft ein sogenannter Reduktionsschacht

Grundsätzlich ist es vorteilhaft, das Produkt zwischen Austrag aus dem Reduktionsaggregat und nachfolgenden Vorrichtungen - beispielsweise solchen, in denen die Brikettierung abläuft - vor Rückoxidation zu schützen, indem es unter bezüglich Oxidation reaktionsträgem Gas gehandhabt wird.

Besonders dann, wenn das Reduktionsgas im Reduktionsaggregat unter einem Überdruck steht, muss dafür gesorgt werden, dass beim Entnehmen des Produktes ein gleichzeitiges Entweichen des - in der Regel heißen - Reduktionsgases vermieden wird. Das geschieht beispielsweise dadurch, dass in die Vorrichtung, über die das Produkt aus dem Reduktionsaggregat ausgetragen wird, - in der Folge auch Produktaustragsvorrichtung genannt - ein sogenanntes Sperrgas - auch Seal Gas genannt - eingeführt wird. Das Seal Gas ist bezüglich Reaktion mit dem Produkt reaktionsträge oder inert und steht unter einem Druck, der etwas über Druck des Reduktionsgases liegt, um praktisch eine Barriere für das Entweichen des Reduktionsgases zu bilden.

Im Falle von Eisenerzen wird das Produkt der Direktreduktion beispielsweise Direct Reduced Iron DRI beziehungsweise HDRI Hot Direct Reduced Iron, oder sponge iron, oder Eisenschwamm genannt.

Ein Verfahren zur Direktreduktion von Metalloxiden zu metallisiertem Material durch Kontakt mit heißem Reduktionsgas, welches zumindest zum Teil durch katalytische Reformierung von Erdgas hergestellt wird, wobei die Wärme für die bei der Reformierung ablaufenden endothermen Reformierungsprozesse zumindest teilweise durch Verbrennung eines Reformerbrenngases geliefert wird, ist beispielsweise in Figur 1 der WO2011012452 beschrieben; es wird MIDREX®-Verfahren genannt. Bei einem solchen MIDREX®-Verfahren wird das Produkt über eine Produktaustragsvorrichtung aus dem unter erhöhtem Druck stehenden Reduktionsschacht ausgetragen. Die Produktaustragsvorrichtung umfasst in diesem Fall ein Austragsorgan und eine Materialfördereinrichtung, die unter einem im Vergleich zum Reduktionsschacht geringerem oder keinem Überdruck steht. Eine entsprechende Materialfördereinrichtung wird beispielsweise oft Produktaustragskammer beziehungsweise Product Discharge Chamber PDC genannt. Zur Abdichtung, das heißt zur Verhinderung des Austretens von heißem Reduktionsgas aus dem Reduktionsschacht, wird reaktionsträges Sperrgas - welches auch oft Bottom Seal Gas BSG genannt wird, da es das untere Ende des Reduktionsschachtes abdichten soll -, verwendet; das ist beispielsweise in WO2008123962 und US4188022 gezeigt. Man spricht davon, die Produktaustragsvorrichtung mit dem Sperrgas zu spülen. Bei einer MIDREX®-Anlage wird als BSG-Gas oft getrocknetes Rauchgas aus einem Reformer einer MIDREX®-Anlage verwendet, welches zu etwa 80 % aus Stickstoff und zu etwa 20% aus Kohlendioxid besteht und entsprechend bezüglich Oxidation von HDRI reaktionsträge ist.

Das BSG durchströmt die Materialsäule im Austragsorgan - im vorliegenden Beispiel ein mit HDRI gefülltes Materialaustragsrohr, auch dynamic seal leg genannt - zum Großteil vom Ort der Einbringung in Richtung PDC und zu einem geringen Teil in Richtung Reduktionsschacht. Ein Großteil des BSG strömt also in die PDC und muss aus dieser ausgeleitet werden. Beim Ausleiten aus der PDC - dann Ventgas genannt - ist es mit Staub des Produktes der Direktreduktion beladen. Je mehr Produkt der Direktreduktion als Staub mit dem PDC ausgetragen wird, desto unwirtschaftlicher wird das Direktreduktionsverfahren, da der Staub nicht oder nur mit erhöhtem Aufwand für beispielsweise Stahlherstellung genutzt werden kann.

Im Rahmen dieser Anmeldung ist mit dem Begriff Ventgas generell Sperrgas gemeint, das aus einer Produktaustragsvorrichtung abgezogen wird - nicht nur aus der PDC eines MIDREX®-Verfahrens ausgeleitetes Seal-Gas. Die Problematik der Staubfracht in Sperrgas besteht immer, wenn Sperrgas Produkt der Direktreduktion durchströmt.

Aufgrund von zwischen heißem DRI - auch Hot Direct Reduced Iron HDRI oder heißer Eisenschwamm genannt-, und Kohlendioxid ablaufenden Reaktionen, und aufgrund von Ausgasen des heißen Eisenschwamm kann das Ventgas auch Spuren von CO Kohlenmonoxid enthalten.

Ein Entlassen des Ventgases in die Umwelt erfordert eine Entstaubung. Entstaubung des Ventgas, die üblicherweise nass erfolgt, benötigt ausreichende Verdünnung mit Falschluft, um beispielsweise die Temperatur zu vermindern oder um Explosionsgrenzen des Staubes im Ventgases zu unterschreiten.

Aufgrund von zwischen heißem DRI -, und Kohlendioxid ablaufenden Reaktionen, und aufgrund von Ausgasen des heißen Eisenschwamm kann das Ventgas auch CO Kohlenmonoxid enthalten. Ein Entlassen den Ventgases in die Umwelt erfordert entsprechende Verdünnung mit Luft - auch Falschluft genannt. Allerdings sind dazu große Mengen Falschluft einzuführen, was apparativ und energetisch aufwendig ist und große in die Umgebung zu entlassende Gasmengen bedingt.

Eine Nutzung von staubbeladenem Ventgas unter thermischer Umsetzung mit sauerstoffhaltigen Gasen ist aufgrund des hohen Staubgehaltes schwierig. Nutzung von entstaubtem, mit Falschluft verdünntem Ventgas unter thermischer Umsetzung mit sauerstoffhaltigen Gasen kann hingegen zu ungewünschten, hohen NOx-Emissionen führen und erfordert ebenfalls einen hohen apparativen Aufwand.

### Zusammenfassung der Erfindung

### Technische Aufgabe

Es ist die Aufgabe der vorliegenden Anmeldung, ein Verfahren sowie eine Vorrichtung bereitzustellen, die eine Überwindung der genannten Schwierigkeiten und eine Nutzung von entstaubtem Ventgas erlauben.

### Technische Lösung

Diese Aufgabe wird gelöst durch ein
Verfahren zur Direktreduktion von metalloxidhältigen, bevorzugt eisenoxidhältigen, Einsatzstoffen, zu metallisiertem Material durch Kontakt mit heißem Reduktionsgas in einem Reduktionsaggregat, wobei das Produkt der Direktreduktion aus dem Reduktionsaggregat über eine Produktaustragsvorrichtung ausgetragen wird, welche mit Sperrgas gespült wird, und aus der Ventgas abgezogen und nachfolgend entstaubt wird,
dadurch gekennzeichnet, dass
zumindest eine Teilmenge des entstaubten Ventgases genutzt wird
- als Energiequelle bei einer Verbrennung bei der Herstellung des Reduktionsgases,
   und/oder
- als Komponente eines
   Ofenbrenngases einer Verbrennung zur Aufheizung des Reduktionsgases,
   und/oder
- als Komponente des Reduktionsgases.

### Vorteilhafte Wirkungen der Erfindung

Bevorzugterweise handelt es sich bei den Metalloxiden um Eisenoxide. Weiters können aber auch, gemäß Richardson-Jeffes-Diagramm, beispielsweise oxidische Erze von Nickel, Kupfer, Blei, Kobalt, reduziert werden.

Das Verfahren zur Direktreduktion kann beispielsweise ein Verfahren nach dem Typ MIDREX® mit katalytischer Reformierung von Kohlenwasserstoffen zur Herstellung eines Reduktionsgases, wobei das Reduktionsgas zumindest zum Teil durch katalytische Reformierung eines Gemisches von gasförmigen Kohlenwasserstoffen hergestellt wird, wobei die Wärme für die bei der Reformierung ablaufenden endothermen Reformierungsprozesse zumindest teilweise durch Verbrennung eines Reformerbrenngases geliefert wird, sein - wie beispielsweise in WO2011012448 und WO2011012452 beschrieben, deren gesamte Offenbarung, speziell hinsichtlich der Reformierung, von der vorliegenden Anmeldung mit umfasst wird.
Das Verfahren zur Direktreduktion kann aber auch beispielsweise ein Direktreduktionsverfahren auf Basis einer Kohlevergasung oder einer Schmelzreduktionsanlage sein, beispielsweise in einem COREX®-DR-Verbund. In diesen Fällen kann das Reduktionsgas vor Einleitung in das Reduktionsaggregat in einem Reduktionsgasofen auf eine für die gewünschten chemischen Reaktionen günstige Temperatur aufgeheizt werden. Sealgas kann aus dem Reduktionsgasofen zur Aufheizung des Reduktionsgases gewonnen werden, da im Vergleich zum MIDREX®-Verfahren ein entsprechender Reformer als Quelle nicht vorhanden ist.

Katalytische Reformierung von Kohlenwasserstoffen zur Herstellung eines Reduktionsgases ist bekannt und beispielsweise in WO2011012448 und WO2011012452 beschrieben, deren gesamte Offenbarung, speziell hinsichtlich der Reformierung, von der vorliegenden Anmeldung mit umfasst wird.
Erfindungsgemäß wird bei so einem Verfahren das entstaubte Ventgas als Energiequelle bei einer Verbrennung bei der Herstellung des Reduktionsgases genutzt. Die Wärme für die bei der Reformierung ablaufenden endothermen Reformierungsprozesse wird ja durch Verbrennung geliefert. Das entstaubte Ventgas kann dem Reformerbrenngas zugemischt werden, bevor dieses in den Reformer eintritt und verbrennt. Es kann aber auch selber direkt in den Reformer eingeleitet werden, wobei seine brennbaren Anteile im Reformer - der hinsichtlich des Reformerbrenngases üblicherweise überstöchiometrisch mit Sauerstoff 02, beispielsweise aus Luft, versorgt wird - verbrannt werden.

Wenn das Reduktionsgas vor Eintritt in das Reduktionsaggregat in einem Reduktionsgasofen aufgeheizt wird, geschieht das in der Regel durch Verbrennung eines Ofenbrenngases. Erfindungsgemäß wird das entstaubte Ventgas als Komponente des Ofenbrenngases genutzt. Auf diese Weise wird es als Energiequelle im Reduktionsgasofen genutzt.

Das Produkt der Direktreduktion von eisenoxid-hältigen Einsatzstoffen, DRI oder HDRI, wird bevorzugt heiß brikettiert, beispielsweise zu hot briquetted iron HBI verarbeitet. Es kann aber auch im heißen Zustand aus dem Reduktionsschacht ausgetragen und direkt im Stahlwerk genutzt werden, beispielsweise durch Zugabe in heißem Zustand in einen Elektrolichtbogenofen.
Der Metallisierungsgrad ist das Verhältnis zwischen metallischem Eisen und Gesamteisen im HBI; er ist bei HBI ≥ 88%. Laut aktuellen International Maritime Organization IMO Vorschriften ist die
Dichte von HBI ≥ 5 kg/dm³. Die Dichte des heiß brikettierten Brikettierungsproduktes kann auch unter dieser Dichte liegen, beispielsweise falls aus bestimmten Rohstoffen oder für besondere Zwecke hergestellt wird.
Bei der heißen Brikettierung kann direkt ein Brikett hergestellt werden, oder es können Stränge - auch Schülpen genannt - hergestellt werden, die entweder selber brechen oder mittels Brecher in kleinere Stücke gebrochen werden.

Zu den Vorrichtungen, in denen die Brikettierung abläuft, wird der Eisenschwamm aus dem Reduktionsaggregat beispielsweise über eine Produktaustragskammer PDC geliefert. Wie in den entsprechenden voranstehenden Passagen der Einleitung zum Stand der Technik erläutert, wird die Produktaustragsvorrichtung mit Sperrgas beaufschlagt; das heißt, Sperrgas wird in die Produktaustragsvorrichtung eingeleitet, und Ventgas wird aus der Produktaustragsvorrichtung abgezogen. Wenn in der Produktaustragsvorrichtung keinerlei Änderung in der Zusammensetzung des Sperrgases erfolgt, entspricht die Zusammensetzung des Ventgases dem Sperrgas. Das Ventgas ist im Vergleich zu dem eingeleiteten Sperrgas stärker mit Staub des Produktes beladen.

Das Ventgas wird im erfindungsgemäßen Verfahren nass entstaubt.

Zumindest eine Teilmenge des entstaubten Ventgases oder das gesamte Ventgas wird erfindungsgemäß genutzt. Reformerbrenngas eines Reformers zur Herstellung von Reduktionsgas, Ofenbrenngas und Reduktionsgas enthalten neben der Komponente des entstaubten Ventgases noch eine oder mehrere andere Komponenten. Das entstaubte Ventgas wird einer Verbrennung bei der Herstellung des Reduktionsgases zugegeben, oder dem Ofenbrenngas oder dem Reduktionsgas.

Bei erfindungsgemäßer Nutzung kann ein Brennwert beziehungsweise eine Reduktionskraft des Ventgases ausgenutzt werden, und das Ventgas wird nicht in die Umgebung entlassen, so dass Probleme hinsichtlich diesbezüglicher Grenzwerte für das Ventgas nicht relevant sind.
Im Vergleich zu herkömmlicher Nassentstaubung sind im erfindungsgemäßen Verfahren wesentlich kleinere Gasmengen zu handhaben, weil bei der erfindungsgemäßen Entstaubung vor dem Entstaubungsschritt keine Verdünnung mit Falschluft erfolgt - bei einem herkömmlichen Verfahren beispielsweise im Anschluss an eine MIDREX®-Direktreduktion wird das staubbeladene Ventgas auf das etwa 10-30fache Volumen verdünnt.
Da das erfindungsgemäß genutzte Ventgas nicht mit Falschluft verdünnt wird, ist eine Auslegung von Anlagenteilen auf die bei Verdünnung anfallenden großen Gasmengen nicht notwendig. Außerdem ist die Problematik der Entstehung von NOx infolge von Stickstoffeintrag durch Falschluft vermindert, da keine Falschluft zur Verdünnung zugeführt wird.

Vorzugsweise erfolgt die Zugabe von entstaubtem Ventgas zu anderen Komponenten des Reformerbrenngases oder Reduktionsgases geregelt in Abhängigkeit von seiner Zusammensetzung und/oder seinem Fluss, der beispielsweise in Nm3/h definiert ist. Beispielsweise können diese Parameter gemessen und zur Vorausberechnung und Regelung der Verbrennung im Reformer oder im Reduktionsgsofen herangezogen werden. Bei Verbrennung im Reformer ist es günstig, dass Reformer beziehungsweise Brenner in Reformern in der Regel bereits so konstruiert und betrieben werden, dass die Entstehung von NOx minimiert ist. Verbrennung von entstaubtem Ventgas erfolgt dort also unter geringer NOx-Entstehung.

Bei der Nassentstaubung des Ventgases wird dieses auf circa 30-50°C gekühlt. Das entstaubte Ventgas wird anschließend komprimiert, um einerseits Druckverluste bei seiner Weiterleitung zu kompensieren, und andererseits einen Druck einzustellen, den die gewünschte Nutzung erfordert. Der Druck beim Austritt aus einem Kompressor kann dabei auf gewünschte Werte geregelt werden.

Ein weiterer Gegenstand der vorliegenden Anmeldung ist eine Vorrichtung zur Durchführung eines erfindungsgemäßen Verfahrens, dadurch gekennzeichnet, dass sie umfasst
- ein Reduktionsaggregat mit einer
   Reduktionsgaszuführung,
- einen Reformer zur Herstellung von Reduktionsgas durch katalytische Reformierung von gasförmigen Kohlenwasserstoffen, von dem die Reduktionsgaszuführung ausgeht,
- eine Reformerbrenngaszufuhrleitung zur Zufuhr von Reformerbrenngas zum Reformer,
- eine Produktaustragsvorrichtung,
- eine in die Produktaustragsvorrichtung mündende Sperrgaszufuhrleitung,
- eine von der Produktaustragsvorrichtung ausgehende Ventgasableitung,
dadurch gekennzeichnet, dass
die Ventgasableitung in eine
Nassentstaubungsvorrichtung mündet, von der zumindest eine Ausleitvorrichtung zum Ausleiten von entstaubtem Ventgas in
- die Reformerbrenngaszufuhrleitung
   und/oder
- den Reformer
ausgeht.

Die gasförmigen Kohlenwasserstoffe, die refomiert werden, werden oft zumindest teilweise mit Erdgas geliefert.

Ein weiterer Gegenstand der vorliegenden Anmeldung ist eine Vorrichtung zur Durchführung eines erfindungsgemäßen Verfahrens, dadurch gekennzeichnet, dass sie umfasst
- ein Reduktionsaggregat mit einer Reduktionsgaszuführung,
- einen Reduktionsgasofen in der Reduktionsgaszuführung, in den eine Ofenbrenngaszuführung mündet,
- eine Produktaustragsvorrichtung,
- eine in die Produktaustragsvorrichtung mündende Sperrgaszufuhrleitung,
- eine von der Produktaustragsvorrichtung ausgehende Ventgasableitung,
dadurch gekennzeichnet, dass
die Ventgasableitung in eine Nassentstaubungsvorrichtung mündet, von der zumindest eine Ausleitvorrichtung zum Ausleiten von entstaubtem Ventgas in die Ofenbrenngaszuführung
ausgeht.

Ein weiterer Gegenstand der vorliegenden Anmeldung ist eine Vorrichtung zur Durchführung eines erfindungsgemäßen Verfahrens, dadurch gekennzeichnet, dass sie umfasst
- ein Reduktionsaggregat mit einer Reduktionsgaszuführung,
- eine Produktaustragsvorrichtung,
- eine in die Produktaustragsvorrichtung mündende Sperrgaszufuhrleitung,
- eine von der Produktaustragsvorrichtung ausgehende Ventgasableitung,
dadurch gekennzeichnet, dass
die Ventgasableitung in eine Nassentstaubungsvorrichtung mündet, von der zumindest eine Ausleitvorrichtung zum Ausleiten von entstaubtem Ventgas in die Reduktionsgaszuführung
ausgeht.

Das Reduktionsaggregat ist beispielsweise ein Reduktionsschacht, bei dem Rohmaterial oben eingegeben wird und unten Produkt ausgetragen wird; beim Durchlaufen des Schachtes der Schwerkraft folgend von oben nach unten wird mittels Reduktionsgas reduziert. Ein solcher Reduktionsschacht wird beispielsweise bei einem MIDREX®-Verfahren mit Reduktionsgas unter einem Druck von 0,03 - 0,3 MPa_{g} betrieben; Überdruck im Vergleich zum Atmosphärendruck der Umgebung.

Die Produktaustragsvorrichtung umfasst beispielsweise ein Austragsorgan und eine Materialfördereinrichtung. Dabei kann es sich beispielsweise um ein Materialaustragsrohr mit Anschluss einer Sperrgaszufuhrleitung, und beispielsweise um einen Zellenradförderer handeln.

Im Fall eines MIDREX®-Verfahrens steht die Materialfördereinrichtung unter einem im Vergleich zum Reduktionsschacht geringerem oder keinem Überdruck im Vergleich zum Atmosphärendruck der Umgebung. Wie bereits in der Einleitung beschrieben, wird eine entsprechende Materialfördereinrichtung bei einem MIDREX®-Verfahren meist Produktaustragskammer beziehungsweise Product Discharge Chamber PDC genannt. Ein Austragsorgan wird im Zusammenhang mit MIDREX®-Verfahren oft dynamic seal leg - siehe WO2008123962 - oder dynamische Gassperre genannt.

Die Ventgasableitung kann beispielsweise von der PDC ausgehen.

Die Ventgasableitung mündet in eine Naßentstaubungsvorrichtung.

Vorzugsweise umfassen die erfindungsgemäßen Vorrichtungen zumindest eine Regelvorrichtung zur Zugabe von entstaubtem Ventgas in Refomerbrenngaszufuhrleitung und/oder
Reformer und/oder Ofenbrenngaszuführung und/oder Reduktionsgaszuführung,
bevorzugt in Abhängigkeit von der Zusammensetzung und/oder dem Fluss des entstaubten Ventgases.

### Kurze Beschreibung der Zeichnungen

Anhand der folgenden schematischen beispielhaften Figuren wird die vorliegende Erfindung anhand von Ausführungsformen erläutert.
Figur 1 zeigt eine Ausführungsform einer erfindungsgemäßen Vorrichtung.
Figur 2 zeigt eine Ausführungsform einer erfindungsgemäßen Vorrichtung, in der eine katalytische Reformierung beispielsweise ä la MIDREX® durchgeführt wird.
Figur 3 zeigt eine Ausführungsform einer erfindungsgemäßen Vorrichtung, in der Reduktionsgas aus einer Kohlevergasungsanlage oder aus eine COREX®-Teil einer COREX®-DR-Anlage stammt.
Figur 4 zeigt eine weitere Ausführungsform der erfindungsgemäßen Vorrichtung

### Beschreibung der Ausführungsformen

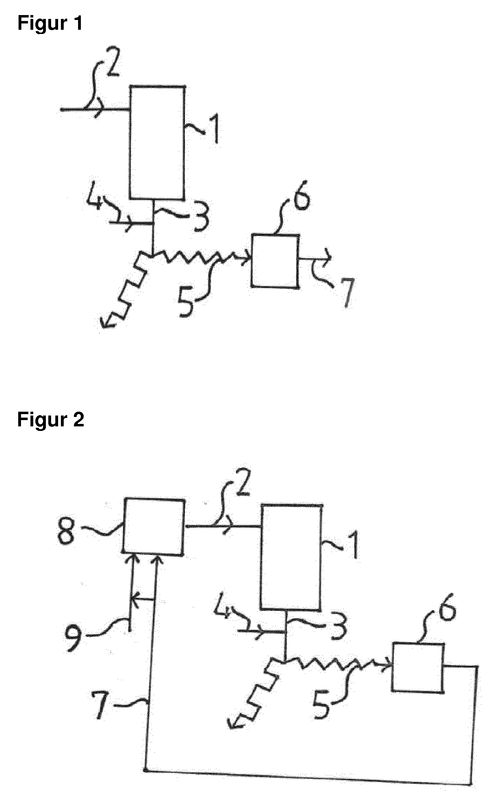

Figur 1 zeigt schematisch einige Aspekte einer Vorrichtung zur Durchführung eines erfindungsgemäßen Verfahrens. Sie umfasst ein Reduktionsaggregat 1 mit einer Reduktionsgaszuführung 2, durch die heißes Reduktionsgas in das Reduktionsaggregat 1 geleitet wird. Auf die Darstellung der Einbringung von metalloxid-hältigen Einsatzstoffen als Rohmaterial in das Reduktionsaggregat wurde zur besseren Übersichtlichkeit verzichtet. Vom Reduktionsaggregat 1 geht eine Produktaustragsvorrichtung 3 aus, mit der das Produkt der Direktreduktion aus dem Reduktionsaggregat 1 ausgetragen wird. In die Produktaustragsvorrichtung 3 mündet eine Sperrgaszufuhrleitung 4, durch die Sperrgas in die Produktaustragsvorrichtung eingeleitet wird, um sie mit Sperrgas zu spülen. Von der Produktaustragsvorrichtung 3 geht eine Ventgasableitung 5 aus; dargestellt mit gezacktem Pfeil. Ventgas aus der Produktaustragsvorrichtung 3 wird durch die Ventgasableitung 5 ausgeführt. Wenn die Produktaustragsvorrichtung beispielsweise ein Austragsorgan und eine Materialfördervorrichtung umfasst - was hier nicht extra dargestellt ist - kann in das Austragsorgan Sperrgas eingeführt werden, welches zum Teil in die Materialfördervorrichtung strömt und aus dieser als Ventgas ausgeführt werden. Die Materialfördereinrichtung könnte beispielsweise ein Zellenradförderer sein oder ein Wischerarm - Englisch wiper bar. Ausgetragenes Produkt ist durch einen eckigen Pfeil angedeutet. Die Ventgasableitung 5 mündet in eine Nassentstaubungsvorrichtung 6, in der das Ventgas entstaubt wird. Von der Nassentstaubungsvorrichtung 6 geht eine Ausleitvorrichtung 7 zum Ausleiten von entstaubtem Ventgas aus. Wo die Ausleitvorrichtung 7 hineinmünden kann, ist in den folgenden Figuren näher erläutert.

Figur 2 zeigt schematisch eine Vorrichtung, in der ein Reformer 8 zur Herstellung von Reduktionsgas durch katalytische Reformierung von Erdgas vorhanden ist, beispielsweise gemäß MIDREX®-Verfahren. Von diesem geht die Reduktionsgaszufuhrleitung 2 aus. Reformerbrenngas wird über die Reformerbrenngaszufuhrleitung 9 bereitgestellt. Auf die Darstellung der Zufuhr von Erdgas zum Reformer 8 wird zur besseren Übersichtlichkeit verzichtet. Auf bereits anhand Figur 1 erläuterte Teile wird nicht eingegangen. Die Ausleitvorrichtung 7 mündet in die Reformerbrenngaszufuhrleitung 9 und den Reformer 8. Entstaubtes Ventgas kann dadurch in den Reformer eingebracht werden oder dem Reformerbrenngas zugemischt werden, um als Energiequelle bei der Verbrennung bei der Herstellung des Reduktionsgases zu dienen.

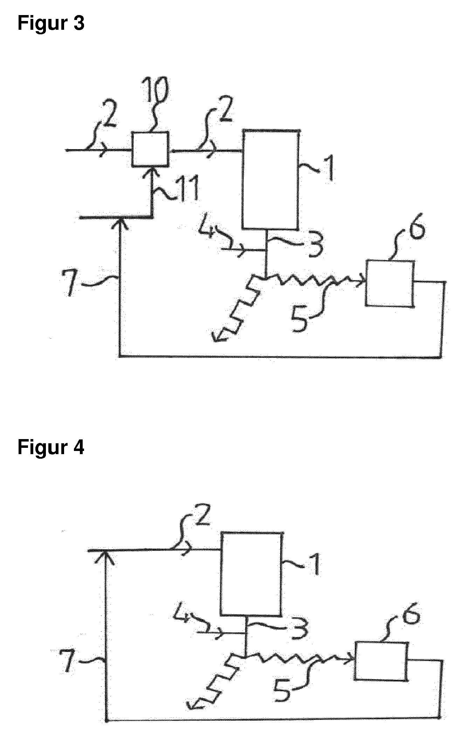

Figur 3 zeigt schematisch eine Vorrichtung, in der ein Reduktionsgasofen 10 in der Reduktionsgaszuführung 2 vorhanden ist. Das Reduktionsgas kann beispielsweise aus einer Kohlevergasungsanlage oder aus einem COREX®-Teil einer COREX®-DR-Anlage stammen. Ofenbrenngas wird über die Ofenbrenngaszuführung 11 bereitgestellt. Auf bereits anhand Figur 1 erläuterte Teile wird nicht eingegangen. Die Ausleitvorrichtung 7 mündet in die Ofenbrenngaszuführung 11. Entstaubtes Ventgas kann dadurch als Komponente des Ofenbrenngases bei einer Verbrennung zur Aufheizung des Reduktionsgases genutzt werden.

Figur 4 zeigt schematisch eine Vorrichtung, in der die Ausleitvorrichtung 7 in die Reduktionsgaszuführung 2 mündet. Entstaubtes Ventgas kann dadurch als Komponente des Reduktionsgases, das in das Reduktionsaggregat 1 eingebracht wird, dienen. Die Reduktionsgaszuführung kann beispielsweise wie in Figur 2 von einem Reformer ausgehen, beziehungsweise können wie in Figur 3 angegeben eine Kohlevergasungsanlage oder der COREX®-Teil einer COREX®-DR-Anlage als Quelle für andere Komponenten des Reduktionsgases dienen.

Selbstverständlich kann in der Reduktionsgaszuführung auch eine CO2 Entfernungsanlage vorhanden sein, um vor Einleitung in das Reduktionsaggregat noch den CO2-Gehalt zu vermindern.

In allen Figuren kann eine
Regelvorrichtung zur Zugabe von entstaubtem Ventgas in Refomerbrenngaszufuhrleitung und/oder
Reformer,
oder Ofenbrenngaszuführung,
oder Reduktionsgaszuführung,
in Abhängigkeit von der Zusammensetzung und/oder dem Fluss des entstaubten Ventgases vorhanden sein, was zur besseren Übersichtlichkeit jedoch nicht extra dargestellt ist.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Offenbarung der vorliegenden Anmeldung umfasst auch die gesamte Offenbarung der WO08123962, US4188022, WO2011012448, WO2011012452.

### Liste der Anführungen

### Patentliteratur

WO2011012452
WO08123962
US4188022
WO2011012448

### Bezugszeichenliste

- 1: Reduktionsaggregat
- 2: Reduktionsgaszuführung
- 3: Produktaustragsvorrichtung
- 4: Sperrgaszufuhrleitung
- 5: Ventgasableitung
- 6: Nassentstaubungsvorrichtung
- 7: Ausleitvorrichtung
- 8: Reformer
- 9: Reformerbrenngaszufuhrleitung
- 10: Reduktionsgasofen
- 11: Ofenbrenngaszuführung

## Patentansprüche

1. Verfahren zur Direktreduktion von metalloxidhältigen, bevorzugt eisenoxidhältigen, Einsatzstoffen, zu metallisiertem Material durch Kontakt mit heißem Reduktionsgas in einem Reduktionsaggregat (1),
wobei das Produkt der Direktreduktion aus dem Reduktionsaggregat (1) über eine Produktaustragsvorrichtung (3) ausgetragen wird, welche mit Sperrgas gespült wird, und aus der Ventgas abgezogen und nachfolgend entstaubt wird,
**dadurch gekennzeichnet, dass**
zumindest eine Teilmenge des entstaubten Ventgases genutzt wird
- als Energiequelle bei einer Verbrennung bei der Herstellung des Reduktionsgases,
und/oder
- als Komponente eines
Ofenbrenngases einer Verbrennung zur Aufheizung des Reduktionsgases,
und/oder
- als Komponente des Reduktionsgases.

2. Zugabe von entstaubtem Ventgas zu anderen Komponenten des Reformerbrenngases oder Reduktionsgases geregelt in Abhängigkeit von seiner Zusammensetzung und/oder seinem Fluss

3. Vorrichtung zur Durchführung eines erfindungsgemäßen Verfahrens, **dadurch gekennzeichnet, dass** sie umfasst
- ein Reduktionsaggregat (1) mit einer Reduktionsgaszuführung (2),
- einen Reformer (8) zur Herstellung von Reduktionsgas durch katalytische Reformierung von gasförmigen Kohlenwasserstoffen, von dem die Reduktionsgaszuführung (2) ausgeht,
- eine Reformerbrenngaszufuhrleitung (9) zur Zufuhr von Reformerbrenngas zum Reformer (8),
- eine Produktaustragsvorrichtung (3),
- eine in die Produktaustragsvorrichtung (3) mündende Sperrgaszufuhrleitung (4),
- eine von der Produktaustragsvorrichtung ausgehende Ventgasableitung (5),
**dadurch gekennzeichnet, dass**
die Ventgasableitung (5) in eine Nassentstaubungsvorrichtung (6) mündet, von der zumindest eine Ausleitvorrichtung (7) zum Ausleiten von entstaubtem Ventgas in
- die Reformerbrenngaszufuhrleitung (9)
und/oder
- den Reformer (8)
ausgeht.

4. Vorrichtung zur Durchführung eines erfindungsgemäßen Verfahrens, **dadurch gekennzeichnet, dass** sie umfasst
- ein Reduktionsaggregat (1) mit einer Reduktionsgaszuführung (2),
- einen Reduktionsgasofen (10) in der Reduktionsgaszuführung (2), in den eine Ofenbrenngaszuführung (11) mündet,
- eine Produktaustragsvorrichtung (3),
- eine in die Produktaustragsvorrichtung (3) mündende Sperrgaszufuhrleitung (4),
- eine von der Produktaustragsvorrichtung (3) ausgehende Ventgasableitung (5),
**dadurch gekennzeichnet, dass**
die Ventgasableitung (5) in eine Nassentstaubungsvorrichtung (6) mündet, von der zumindest eine Ausleitvorrichtung (7) zum Ausleiten von entstaubtem Ventgas in die Ofenbrenngaszuführung (11) ausgeht.

5. Vorrichtung zur Durchführung eines erfindungsgemäßen Verfahrens, **dadurch gekennzeichnet, dass** sie umfasst
- ein Reduktionsaggregat (1) mit einer Reduktionsgaszuführung (2),
- eine Produktaustragsvorrichtung (3),
- eine in die Produktaustragsvorrichtung (3) mündende Sperrgaszufuhrleitung (4),
- eine von der Produktaustragsvorrichtung (3) ausgehende Ventgasableitung (5),
**dadurch gekennzeichnet, dass**
die Ventgasableitung (5) in eine Nassentstaubungsvorrichtung (6) mündet, von der zumindest eine Ausleitvorrichtung (7) zum Ausleiten von entstaubtem Ventgas in die Reduktionsgaszuführung (2) ausgeht.

6. Vorrichtung nach einem der Ansprüche 3 bis 5, **dadurch gekennzeichnet, dass** sie auch umfasst zumindest eine Regelvorrichtung
zur Zugabe von entstaubtem Ventgas in Reformerbrenngaszufuhrleitung (9) und/oder Reformer (8) und/oder
Ofenbrenngaszuführung (11) und/oder Reduktionsgaszuführung (2),
bevorzugt in Abhängigkeit von der Zusammensetzung und/oder dem Fluss des entstaubten Ventgases.
